# EUROPEAN PATENT APPLICATION

(11) **EP 2 645 059 A1**
(43) Date of publication of application: **02.10.2013**
(21) Application number: 11843394.5
(22) Date of filing: 24.11.2011
(51) Int. Cl.: G01C 17/38, G01C 17/04, G01C 17/32

(54) **PORTABLE TERMINAL WITH ELECTRONIC COMPASS AND DIRECTION CALCULATION METHOD**

(30) Priority: 25.11.2010 JP 2010261952
(71) Applicant: NEC CASIO Mobile Communications, Ltd., Kawasaki-shi Kanagawa 211-8666 (JP)
(72) Inventor: SHINADA, Yousuke, Kawasaki-shi Kanagawa 211-8666 (JP)
(74) Representative: Vossius & Partner
(86) International application number: PCT/JP2011/077059
(87) International publication number: WO 2012/070619

(57) **Abstract**

A mobile terminal with electronic compass is provided with a first housing that houses a geomagnetic sensor, a second housing connected to the first housing, with relative position thereto being variable, a state detection unit that detects a relative position state between the first housing and the second housing, an offset correction initial value storage unit that stores an offset correction initial value for each of a plurality of relative position states detected by the state detection unit, and an offset correction value determination unit that determines whether the offset correction value calculated by a calibration unit is valid or invalid. The offset correction value determination unit, in a case of determining that the offset correction value calculated by the calibration unit is valid, updates the offset correction value as the offset correction initial value corresponding to the relative position state, and stores the offset correction initial value in the offset correction initial value storage unit.

## Description

### TECHNICAL FIELD

### (CROSS-REFERENCE TO RELATED APPLICATIONS)

The present application claims priority from Japanese Patent Application No. JP2010-261952 (filed on November 25, 2010) the content of which is incorporated herein in its entirety by reference thereto.
The present invention relates to a mobile terminal with electronic compass for measuring orientation, and an orientation calculation method. In particular, the present invention relates to a mobile terminal with electronic compass provided with a geomagnetic sensor for measuring orientation, and an orientation calculation method by a sensor value of the geomagnetic sensor.

### BACKGROUND ART

In recent years, mobile terminals such as mobile telephones or the like, are provided with the function of an electronic compass that displays an orientation calculated by a geomagnetic sensor, and furthermore navigation function that displays the orientation obtained by the geomagnetic sensor superimposed on a map image. In the navigation function, by rotating the map so as to have a display in which a user's direction of movement is in an upward direction in a display screen of the mobile terminal, a display that is easy to understand for the user is realized. In order to implement this function, it is necessary to obtain the correct orientation, and with regard to the magnetism received by the geomagnetic sensor, it is necessary to correct the effects of magnetism other than geomagnetism. Accordingly, a calibration is performed in an environment where a mobile terminal is used, and an offset correction value is calculated. After the offset correction value is calculated, a correct orientation is calculated based on a sensor value of the geomagnetic sensor and the offset correction value. However, in performing a calibration, the user has to swivel the mobile terminal around, and since this is a troublesome operation, performing the calibration frequently is a burden to the user and is undesirable.

Meanwhile, inside a mobile telephone housing there are various parts that generate magnetism, and a geomagnetic sensor disposed within the housing is affected by them. Here, a mobile telephone is divided into a casing for an operation unit and a casing for a display unit, and the positional relationship between the two casings varies according to whether the mobile telephone is in an open state or a closed state. Since the geomagnetic sensor normally housed in the casing of the operation unit is closer to parts housed in the casing of the display unit in a closed state than in an open state, overall, the effect of magnetism due to parts inside the mobile telephone is larger in the closed state.

Thus, in Patent Literature 1, offset correction values for an open state and a closed state of a mobile telephone are respectively stored as separate offset correction initial values, a detection is made as to whether the mobile telephone is in an open state or a closed state, and the offset correction initial value corresponding to the detected state is read and used. In a case where the offset correction value in the state in question is updated by a calibration, the stored offset correction initial value is rewritten with the updated offset correction value. The next time if the mobile telephone is in the same state, the stored offset correction initial value is read and used. By having such a configuration, it is possible to reduce the frequency of calibrations, and the orientation accuracy is also improved by using the offset correction value corresponding to the open state or closed state of the mobile telephone. It is to be noted that in the present Description, a stored offset correction value is referred to as "offset correction initial value" and is distinguished from other offset correction values.

### CITATION LIST

### [Patent Literature]

[PTL 1]
   Japanese Patent Kokai Publication No. JP2005-291932A
[PTL 2]
   Japanese Patent Kokai Publication No. JP2007-3460A

### SUMMARY OF INVENTION

### TECHNICAL PROBLEM

The disclosures of Patent Literatures 1 and 2 given above are incorporated herein in their entirety by reference thereto. The following analysis is given according to the present invention.

In a method disclosed in Patent Literature 1, however, a stored offset correction initial value is always rewritten with an offset correction value updated by a calibration. In a case where a calibration of an electronic compass is performed when a user is close to a metal building or in an environment subject to a strong magnetic field, the offset correction value obtained by the calibration of the electronic compass has a value that differs greatly from a value in an environment with a normal magnetic field. However, in this case also, the stored offset correction initial value is rewritten with the offset correction value updated by the calibration. Accordingly, there is a problem in that, when the electronic compass is used in an environment with a normal magnetic field the next time, the offset correction initial value that differs greatly is read, and thus a correct orientation can not be obtained immediately. In order to obtain the correct orientation, it is necessary for the user to swivel the mobile terminal around, to calibrate the electronic compass.

Accordingly, the present invention has been made in view of the above-mentioned situation and has an object to provide a mobile terminal with an electronic compass in which, after using the electronic compass after performing a calibration in an environment subject to a strong magnetic field, on moving to an environment with a normal magnetic field, a correct orientation can be immediately obtained.

### SOLUTION TO PROBLEM

According to a first aspect of the present invention there is provided a mobile terminal with electronic compass that includes a geomagnetic sensor, a calibration unit that calculates an offset correction value for the geomagnetic sensor, a geomagnetic orientation calculation unit that calculates orientation based on a sensor value obtained by the geomagnetic sensor and the offset correction value, and a display unit that displays the calculated orientation. The mobile terminal is provided with a first housing that houses the geomagnetic sensor, a second housing connected to the first housing, with relative position thereto being variable, and a state detection unit that detects a relative position state between the first housing and the second housing. The mobile terminal is further provided with an offset correction initial value storage unit that stores an offset correction initial value for each of a plurality of relative position states detected by the state detection unit, and an offset correction value determination unit that determines whether the offset correction value calculated by a calibration unit is valid or invalid. The offset correction value determination unit, in a case of determining that the offset correction value calculated by the calibration unit is valid, updates the offset correction value as the offset correction initial value corresponding to the relative position state, and stores the offset correction initial value in the offset correction initial value storage unit.

According to a second aspect of the present invention, there is provided a geomagnetic orientation calculation method of calculating a geomagnetic orientation based on a sensor value obtained by a geomagnetic sensor. The geomagnetic orientation calculation method includes a state detection step of detecting a relative position state between a first housing that houses the geomagnetic sensor, and a second housing connected to the first housing, with relative position thereto being variable. The geomagnetic orientation calculation method further includes a step of reading the offset correction initial value corresponding to the relative position state detected in the state detection step, to set the offset correction initial value as the offset correction value; a step of calibrating an offset correction value of the geomagnetic sensor to update the offset correction value; and an offset correction value determination step of determining whether the offset correction value obtained by calibration is valid or invalid. The geomagnetic orientation calculation method further includes a step of storing, in a case where the determination in the offset correction value determination step is valid, the offset correction value obtained by calibration as the offset correction initial value corresponding to the relative position state; and a geomagnetic orientation calculation step of calculating orientation, based on the sensor value obtained by the geomagnetic sensor and the offset correction value.

### EFFECT OF INVENTION

According to the first aspect of the present invention, it is possible to provide a mobile terminal with an electronic compass in which, after using the electronic compass by performing a calibration in an environment subject to a strong magnetic field, on moving to an environment with a normal magnetic field a correct orientation can be immediately obtained.

According to the second aspect of the present invention, it is possible to provide an orientation calculation method by which, after obtaining an orientation by performing a calibration in an environment subject to a strong magnetic field, on moving to an environment with a normal magnetic field a correct orientation can be immediately obtained.

### BRIEF DESCRIPTION OF THE DRAWINGS

FIG. 1 is a block diagram for illustrating parts related to orientation calculation and display, in a mobile terminal with an electronic compass according to a first exemplary embodiment of the present invention.
FIG. 2 is a flow chart for illustrating an orientation calculation method according to the first exemplary embodiment of the present invention.
FIG. 3 is a block diagram for illustrating parts related to orientation calculation and display, in a conventional mobile terminal with an electronic compass.
FIG. 4 is a diagram showing an overview of a mobile terminal (slide type) with an electronic compass according to the first exemplary embodiment of the present invention.
FIG. 5 is a diagram showing an overview of a mobile terminal (clam shell type) with an electronic compass according to the first exemplary embodiment of the present invention.
FIG. 6 is a diagram showing an internal structure of a mobile terminal (clam shell type) with an electronic compass according to the first exemplary embodiment of the present invention.
FIG. 7 is a diagram for illustrating a principle of calibration according to the first exemplary embodiment of the present invention.
FIG. 8 is a diagram for illustrating a principle of calibration according to the first exemplary embodiment of the present invention.
FIG. 9 is a flow chart for illustrating a conventional orientation calculation method.

### MODES FOR CARRYING OUT THE INVENTION

An outline of an exemplary embodiment of the present invention is described, making reference to the drawings as necessary. It is to be noted that that reference symbols of the drawings referred to in this outline are provided by way of examples solely in order to assist understanding, and are not intended to limit the present invention to the illustrated modes.

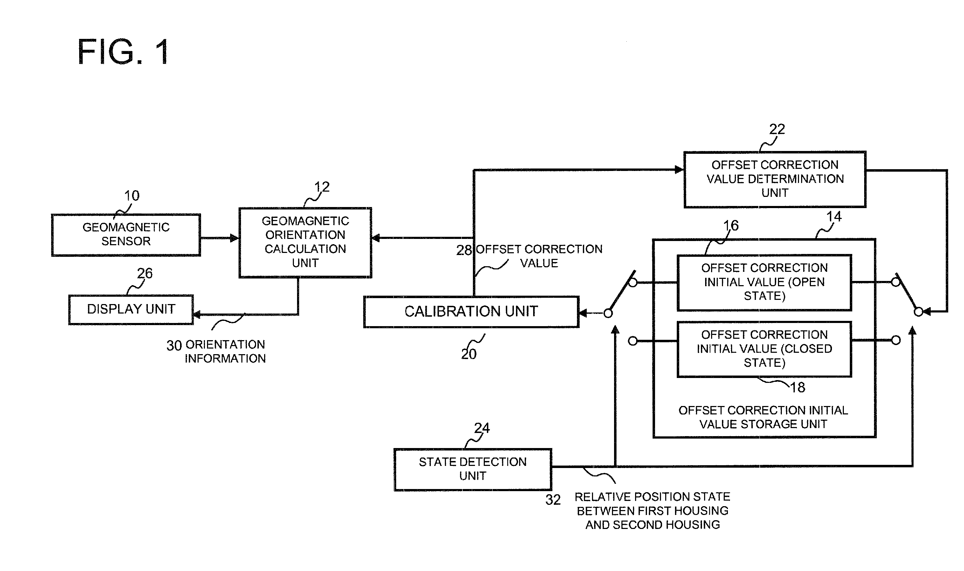

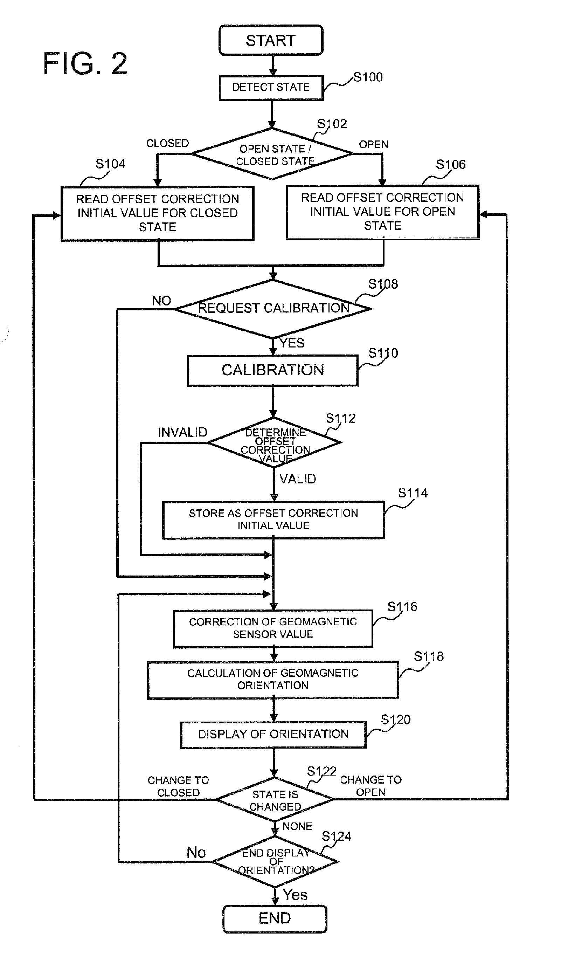

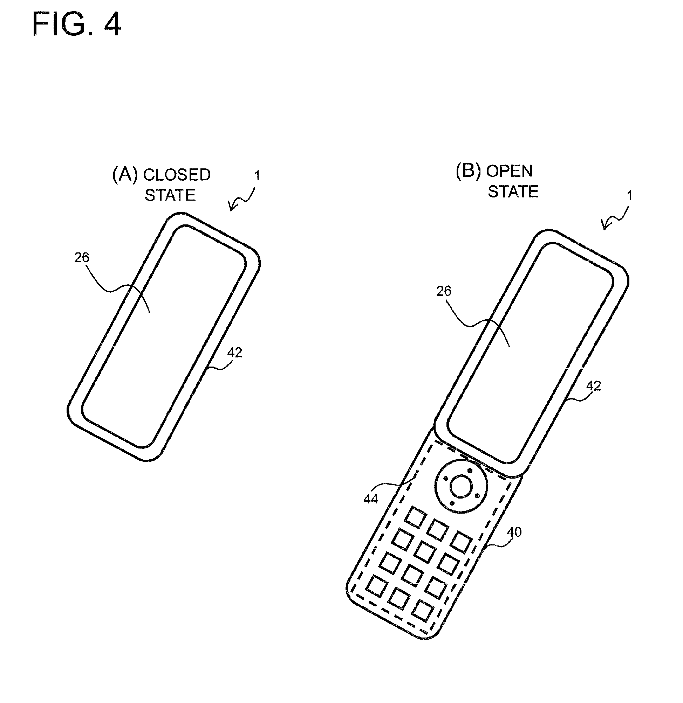

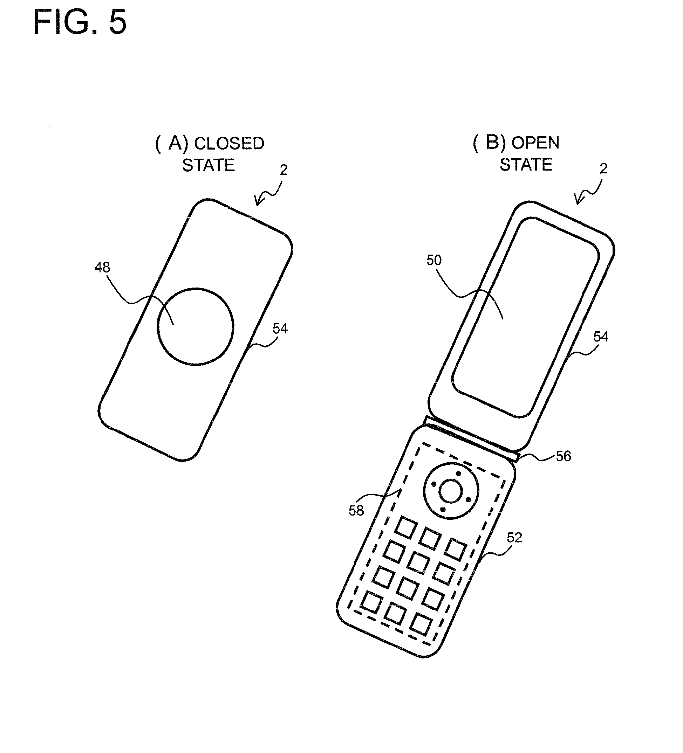

As shown in FIG. 1, FIG. 4, and FIG. 5, a mobile terminal with an electronic compass (1 in FIG. 4; 2 in FIG. 5) according to one exemplary embodiment of the present invention is provided with: a geomagnetic sensor 10, a calibration unit 20 that calculates an offset correction value for the geomagnetic sensor 10, a geomagnetic orientation calculation unit 12 that calculates an orientation based on a sensor value obtained by the geomagnetic sensor 10 and the offset correction value, and a display unit 26 that displays the calculated orientation, and is further provided with: a first housing (40 in FIG. 4; 52 in FIG. 5) that houses the geomagnetic sensor 10, a second housing (42 in FIG. 4; 54 in FIG. 5) connected to the first housing, with relative position thereto being variable, a state detection unit 24 that detects a relative position state between the first housing and the second housing, an offset correction initial value storage unit 14 that stores an offset correction initial value for each of a plurality of relative position states detected by the state detection unit 24, and an offset correction value determination unit 22 that determines whether the offset correction value calculated by the calibration unit 20 is valid or invalid, wherein the offset correction value determination unit 22, in a case of determining that the offset correction value calculated by the calibration unit 20 is valid, updates the offset correction value as the offset correction initial value corresponding to the relative position state, and stores the offset correction initial value in the offset correction initial value storage unit 14.

Furthermore, as shown in FIG. 2, an orientation calculation method according to one exemplary embodiment of the present invention is a geomagnetic orientation calculation method of calculating a geomagnetic orientation based on a sensor value obtained by the geomagnetic sensor 10, the method including: a state detection step S100 of detecting a relative position state of the first housing (40 in FIG. 4; 52 in FIG. 5) that houses the geomagnetic sensor 10, and the second housing (42 in FIG. 4; 54 in FIG. 5) connected to the first housing, with relative position thereto being variable; a step S104, S106 of reading the offset correction initial value corresponding to the relative position state detected in the state detection step, to set the offset correction initial value as the offset correction value; a step S110 of calibrating the offset correction value of the geomagnetic sensor 10 and updating the offset correction value; an offset correction value determination step S112 of determining whether the offset correction value obtained by calibration is valid or invalid; a step S 114 of storing, in a case where the determination in the offset correction value determination step S112 is valid, the offset correction value obtained by calibration as the offset correction initial value corresponding to the relative position state; and a geomagnetic orientation calculation step S118 of calculating orientation, based on the sensor value obtained by the geomagnetic sensor 10 and the offset correction value.

The following modes are possible in the present invention.

### (Mode 1)

As already described in the first aspect.

### (Mode 2)

The relative position states between the first housing and the second housing may include an open state in which an operation unit of the mobile terminal is exposed, and a closed state in which the operation unit is hidden.

### (Mode 3)

A representative value of offset correction may be set for each of a plurality of relative position states, in a case where the difference between the offset correction value calculated by the calibration unit and the representative value of the offset correction corresponding to the relative position state is within a prescribed range, a determination may be made that the offset correction value calculated by the calibration unit is valid, and in the other cases a determination may be made that the offset correction value is invalid.

### (Mode 4)

In a case where the difference between the offset correction value calculated by the calibration unit and the latest offset correction initial value corresponding to the relative position state is within a prescribed range, a determination may be made that the offset correction value calculated by the calibration unit is valid, and in the other cases a determination may be made that the offset correction value is invalid.

### (Mode 5)

As already described in the second aspect.

### (Mode 6)

A representative value of offset correction may be set for each of a plurality of relative position states, in the offset correction value determination step, in a case where the difference between the offset correction value obtained in the calibration and the representative value of the offset correction corresponding to the relative position state is within a prescribed range, a determination may be made that the offset correction value obtained in the calibration is valid, and in the other cases a determination may be made that the offset correction value is invalid.

### (Mode 7)

In the offset correction value determination step, in a case where the difference between the offset correction value obtained in the calibration and the latest offset correction initial value corresponding to the relative position state is within a prescribed range, a determination may be made that the offset correction value obtained in the calibration is valid, and in the other cases a determination may be made that the offset correction value is invalid.

Exemplary embodiments will now be explained in detail.

### [First Exemplary Embodiment]

### (Configuration of First Exemplary Embodiment)

FIG. 4 and 5 are diagrams showing an overview of a mobile terminal with an electronic compass, according to a first exemplary embodiment of the present invention. FIG. 4 is a slide type of mobile telephone, and FIG. 5 is a clam shell type of mobile telephone. In FIG. 4 and FIG. 5, (A) shows a closed state, and (B) shows an open state. In a case of the slide type of FIG. 4, it is possible to display an electronic compass or a navigation function of the same format in a display unit 26, irrespective of whether the mobile telephone is in the open state or the closed state. The configuration is such that, by performing a sliding operation by a user, the relative position between a first housing 40 including an operation unit 44 and a second housing 42 including the display unit 26 is changed in a longitudinal orientation. By a sliding operation, the closed state where the operation unit 44 is hidden goes to the open state where the operation unit 44 is exposed.

On the other hand, the clam shell type in FIG. 5 is called a folding type, and it is possible to display an electronic compass or a navigation function in a display unit (main display) 50 in an open state. Depending on device type, there may also be a display unit (sub-display) 48 as in FIG. 5(A), and in this case, it is possible to display the electronic compass in the sub-display 48 in a closed state also. However, since the sub-display is small, it is often impossible to display a navigation function including map information. A first housing 52 including an operation unit 58, and a second housing 54 including the display unit (main display 50) and the display unit (sub-display) 48 are connected by a hinge 56, and it is possible to change the relative position state between the first housing and the second housing with the hinge 56 as axis of rotation. If the relative position between the first housing and the second housing is widened from the closed state where the operation unit 58 is hidden, the open state where the operation unit 58 is exposed is obtained.

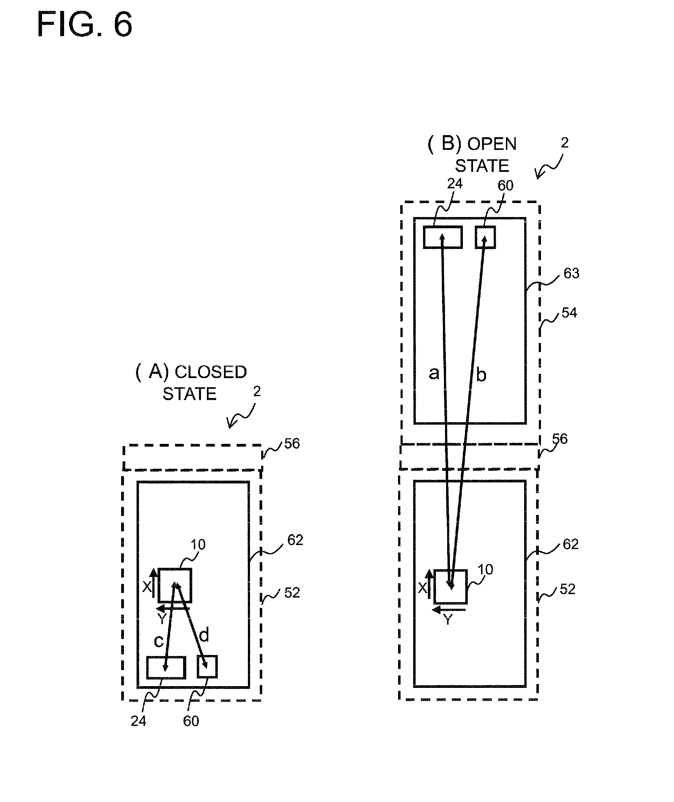

FIG. 6 shows inner parts of the clam shell type of mobile telephone with an electronic compass, as shown in FIG. 5, and a similar configuration is disclosed in Patent Literature 2. The closed state of FIG. 6(A) corresponds to the closed state of FIG. 5(A), and the open state of FIG. 6(B) corresponds to the open state of FIG. 5(B). An operation unit side circuit board 62 is housed in the first housing 52, and a geomagnetic sensor 10 is mounted on the operation unit side circuit board 62. Here, the geomagnetic sensor 10 is a sensor that detects magnetism in 3-axial directions: X axis, Y axis, and Z axis; the X axis and Y axis directions are in a plane parallel to the operation unit 58 of the mobile terminal, and the Z axis, which is not illustrated, is perpendicular to an XY plane. Note that the axes arrangement is not limited to the above arrangement, and as long as directions in 3-dimensions have feasible basic vector directions, there is no particular limitation. In the second housing 54, as shown in FIG. 6(B), a receiver-speaker 60 and a state detection unit 24 are mounted on a display unit side circuit board 63.

Next, FIG. 1 is a block diagram showing parts related to orientation calculation and display, in the mobile terminal with an electronic compass, according to the first exemplary embodiment of the present invention. The state detection unit 24 in FIG. 1, for a clam shell type as shown in FIG. 6, is mounted on the display unit side circuit board 63 housed in the second housing, and outputs a signal to detect an open state or closed state. An offset correction initial value storage unit 14 is configured by nonvolatile memory, and stores an offset correction initial value corresponding to the open state, and an offset correction initial value corresponding to the closed state. Thereafter, the offset correction initial value corresponding to the open state or closed state detected by the state detection unit 24 is read and used as an offset correction value, as necessary. Other constituent elements shown in FIG. 1 will be described below, as necessary, in an explanation of operation of the first exemplary embodiment.

### (Operation of First Exemplary Embodiment)

Next, operations of an orientation calculation method according to the first exemplary embodiment of the present invention are described, making reference to FIG. 1 and FIG. 2. First, after a user starts an electronic compass application in the mobile terminal with an electronic compass, and a relative position state between the first housing and the second housing 32 is detected by the state detection unit 24 (step S100). Next, the detected state is distinguished as an open state or a closed state (step S102). Next, where the detected state is distinguished as the closed state, an offset correction initial value (closed state) 18 in the offset correction initial value storage unit 14 is read and set as an offset correction value (step S104). On the other hand, where the detected state is distinguished as the open state, an offset correction initial value (open state) 16 in the offset correction initial value storage unit 14 is read and set as an offset correction value (step S106).

Here, in steps S104 and S106, an effect of separating the offset correction initial values according to closed state and open state is described below, making reference to contents described in Patent Literature 2. In the mobile telephone with electronic compass (clam shell type) 2 of FIG. 6, in a case of the closed state, the distance between the state detection unit 24 and the geomagnetic sensor 10 is c, and the distance between the receiver-speaker 60 and the geomagnetic sensor 10 is d. On the other hand, in a case of the open state, the distance between the state detection unit 24 and the geomagnetic sensor 10 is a, and the distance between the receiver-speaker 60 and the geomagnetic sensor 10 is b. Here, comparing the distances of c and a, and the distances of d and b, respectively, the relationships are c < a and d < b. The state detection unit 24 is configured to be provided with a magnet for lid opening/closing, and generates a magnetic field. The receiver-speaker 60 also is provided with a magnet and generates a magnetic field. With regard to the magnetic fields generated by the state detection unit 24 and the receiver-speaker 60, the closer the distance is, the larger the effect is, so that the geomagnetic sensor 10 is affected by the magnetic fields generated by the state detection unit 24 and the receiver-speaker 60 more in the closed state than in the open state. Accordingly, in the offset correction initial value storage unit 14, the offset correction initial value (open state) 16 and the offset correction initial value (closed state) 18 are stored separately, and an offset correction initial value is read corresponding to the open state or closed state detected by the state detection unit 24. From the above, it is possible to use an offset correction value corresponding to the state of the mobile terminal, so that the orientation accuracy is improved. Here, the example is illustrated regarding the state detection unit 24 and the receiver-speaker 60. However, the same applies to a case where a part other than these parts generates magnetism inside the mobile terminal and the geomagnetic sensor 10 is affected differently according to whether the mobile terminal is in the open state or the closed state. The above explanation has been given concerning a case of a clam shell type of mobile terminal. However, for a case of a slide type mobile terminal also, there is a part(s) that generates magnetism inside the mobile terminal by which the geomagnetic sensor is affected differently according to whether the mobile terminal is in an open state or a closed state. Thus, by separating offset correction initial values corresponding to the open state or closed state, a similar effect is obtained.

Next, in a flowchart of FIG. 2, a determination is made as to whether or not a calibration is requested (step S108). The calibration request can be configured to be generated at various timings. For example, a configuration is possible in which, in order to obtain a more accurate orientation, a user selects a calibration menu at an operation screen of an electronic compass application so as to generate the calibration request. Alternatively, a configuration is possible in which, in a case where at least a prescribed time has elapsed from the time of a previous calibration, the electronic compass application generates the calibration request. Alternatively, a configuration is possible in which, when the open/closed state of the mobile terminal changes, a message is sent to make the user select whether or not to perform a calibration, and in a case where the user selects to perform a calibration, a calibration request is generated.

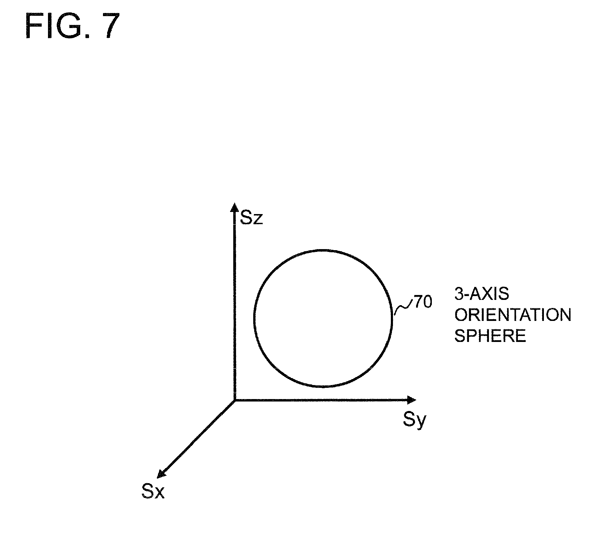

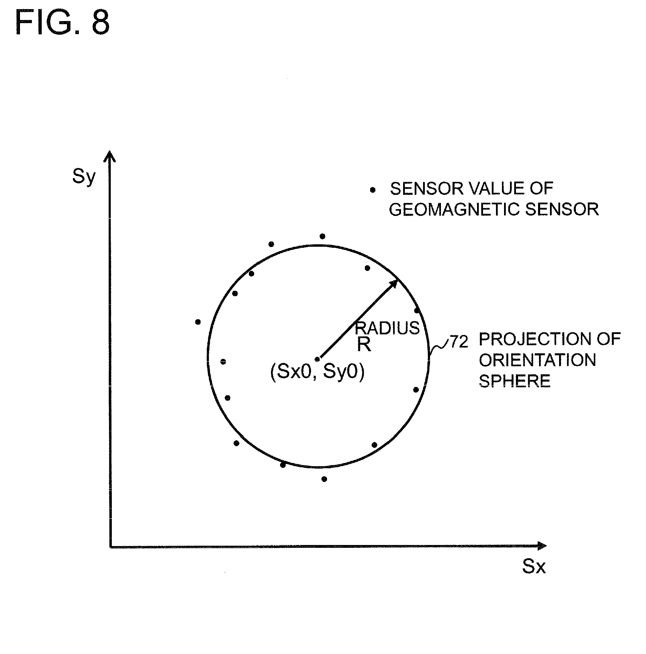

Next, in a case where it is determined that there is a calibration request, the calibration unit 20 performs a calibration of the electronic compass, and updates the offset correction value (step S110). Here, an explanation is given concerning a principle of calibration, making reference to FIGS. 7 and 8. FIG. 7 shows sensor values Sx, Sy, Sz, for 3-axes, detected by the geomagnetic sensor 10, in 3-dimensions. In a case where the geomagnetic sensor 10 is turned around at various angles, ideally, sensor values are plotted on a 3-axis orientation sphere 70. An offset correction value of the geomagnetic sensor 10 relates to the center coordinates (Sx0, Sy0, Sz0) of the 3-axis orientation sphere 70. FIG. 8 shows an example in which the sensor values Sx, Sy, Sz, for 3-axes, as shown in FIG. 7, are projected onto an XY plane, and the sensor values of the geomagnetic sensor are superimposed to be plotted. In calculating coordinates of the offset correction value from the sensor values of the geomagnetic sensor, an optimization algorithm fitting an optimized sphere to the sensor values of the geomagnetic sensor is applied. Optimized parameters are center coordinates (Sx0, Sy0, Sz0) and radius R. A projection of an orientation sphere 72 obtained by the optimization from the sensor values of the geomagnetic sensor is shown on the 2-dimensional XY plane in FIG. 8. As is understood from FIG. 8, it is preferred that the sensor values of the geomagnetic sensor used in the calibration of electronic compass are distributed in all directions of the sphere.

With regard to the determination of a calibration request in step S108, in a case where there is no calibration request, calibration is not performed, and the offset correction value is still the offset correction initial value (16 or 18) that has been read. That is, in this case the offset correction value is not changed in the calibration unit 20.

Next, an offset correction value determination unit 22 determines the offset correction value (step S112). Below, a detailed explanation is given concerning the determination of the offset correction value performed by the offset correction value determination unit 22. A first method is a method of storing representative values of offset correction for an open state and a closed state when the mobile terminal is shipped from the factory, and to use these values. The representative value of offset correction in the open state is OFFSET_A_OPEN, and the representative value of offset correction in the closed state is OFFSET_A_CLOSE. OFFSET_A_OPEN and OFFSET_A_CLOSE may use a value corresponding to the device type of the mobile terminal, or may use a value obtained based on a value measured for each device when tested in the factory. With a prescribed determination threshold as α, if a difference between an offset correction value in the open state obtained by a calibration and OFFSET_A_OPEN is within a range of -α to +α, the offset correction value in the open state obtained by the calibration is determined to be valid; otherwise, it is determined to be invalid. If a difference between an offset correction value in the closed state obtained by a calibration and OFFSET_A_CLOSE is within a range of -α to +α, the offset correction value in the closed state obtained by calibration is determined to be valid; otherwise, it is determined to be invalid.

Next, a second method is a method of using a latest offset correction initial value. The latest offset correction initial value in the open state is OFFSET_INI_B_OPEN and the latest offset correction initial value in the closed state is OFFSET_INI_B_CLOSE. With a prescribed determination threshold as β, if a difference between an offset correction value in the open state obtained by a calibration and OFFSET_INI_B_OPEN is within a range of -β to β, the offset correction value in the open state obtained by the calibration is determined to be valid; otherwise, it is determined to be invalid. If a difference between an offset correction value in the closed state obtained by a calibration and OFFSET_INI_B_CLOSE is within a range of -β to +β, the offset correction value in the closed state obtained by the calibration is determined to be valid; otherwise, it is determined to be invalid.

Next, in the flowchart of FIG. 2, when a determination of valid is made in step S112, the offset correction value calculated by the calibration is stored in the offset correction initial value storage unit 14 (step S114).

Next, a sensor value of the geomagnetic sensor detected by the geomagnetic sensor 10 is corrected by the offset correction value corresponding to the state of the mobile terminal (step S116). Here, the offset correction is performed by subtracting the offset correction value from the sensor value of the geomagnetic sensor.

Next, a geomagnetic orientation is calculated by a well known method, using the corrected sensor value of the geomagnetic sensor (step S118). Next, the calculated orientation is displayed in the display unit 26 (step S120). Next, a determination is made as to whether the state detected by the state detection unit 24 has changed (step S122). In a case where there is a change from the open state to the closed state, control returns to step S104, and the processing thereafter is repeated. On the other hand, in a case where there is a change from the closed state to the open state, control returns to step S106, and the processing thereafter is repeated.

On the other hand, in a case where it is determined that the state has not changed, a determination is made as to whether or not the application ends the display of orientation (step S124). In a case of a determination to end (Yes), the display of orientation is ended; and in a case of a determination not to end (No), control returns to step S116 and the processing thereafter is repeated.

Here, the display of orientation in step S120 may be only an display of orientation by the electronic compass, or may be a navigation screen displaying the orientation superimposed on map information, or, in order that the direction in which a user is moving is an upward direction on the display screen of the mobile terminal, may be a navigation screen with a display made easy to understand for the user, by rotating a map.

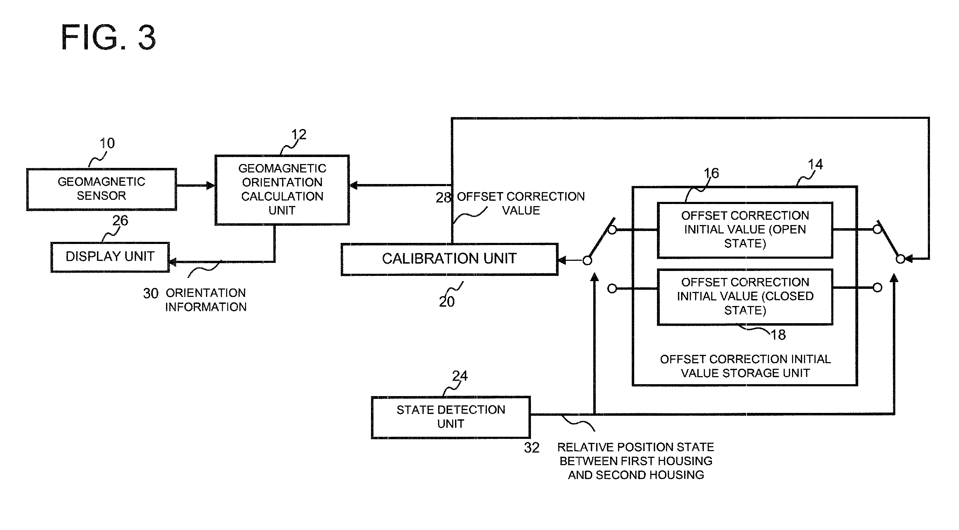

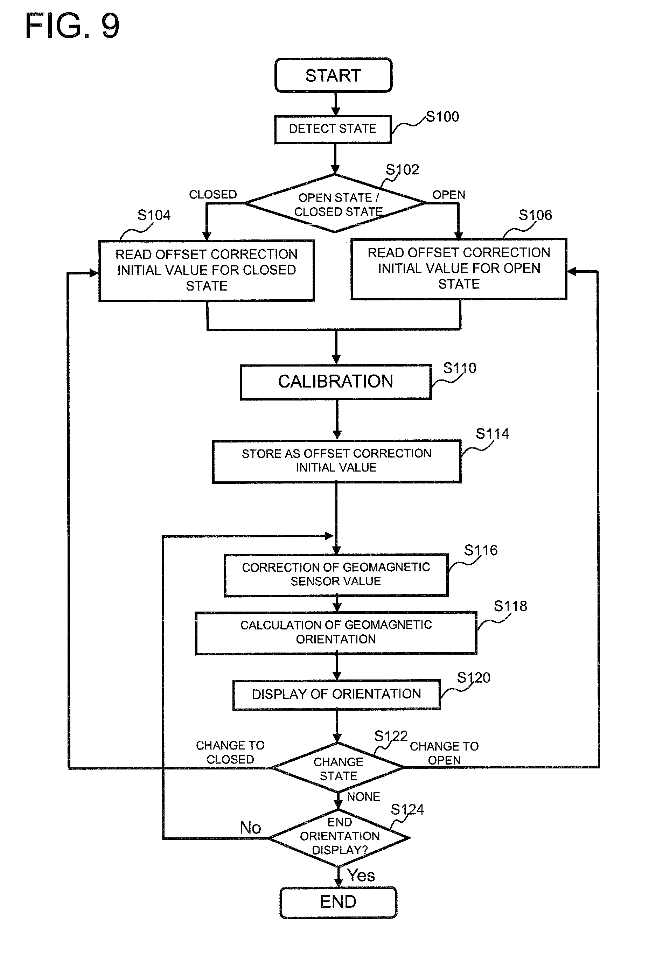

Next, in order to compare with the first exemplary embodiment, FIG. 3 and FIG. 9 show a conventional mobile terminal with an electronic compass and an orientation calculation method. FIG. 3 is a block diagram for describing parts related to orientation calculation and display in the conventional mobile terminal with an electronic compass. In contrast to FIG. 1, FIG. 3 has a configuration without the offset correction value determination unit 22. FIG. 9 is a flow chart for describing a conventional orientation calculation method. In contrast to FIG. 2, FIG. 9 has a configuration without step S108 of requesting calibration, and step S112 of determining an offset correction value. First, as shown in FIG. 3 and FIG. 9, in the orientation calculation method in the conventional mobile terminal with an electronic compass, a determination is not performed as to whether the offset correction value calculated by the calibration unit 20 is valid or invalid, and an offset correction value obtained by calibration is always stored in the offset correction initial value storage unit 14. Accordingly, in a case where a calibration of the electronic compass is performed in an environment subject to a strong magnetic field, the offset correction value has a value that differs greatly from a value in an environment with a normal magnetic field, but in this case also, the stored offset correction initial value is rewritten with the offset correction value obtained by the calibration. Accordingly, the next time the electronic compass is used in an environment with a normal magnetic field, an offset correction initial value that differs greatly is read, and thus a correct orientation is not obtained immediately. Therefore, in order to obtain the correct orientation, it is necessary to perform a calibration. In FIG. 2, a calibration is performed only in a case of there being a calibration request, but on the other hand, FIG. 9 has a configuration in which calibration is always performed. Accordingly, in the conventional mobile terminal with an electronic compass, there is a problem in that the frequency at which the user must perform a calibration increases, placing a burden on the user. Furthermore, a calibration becomes necessary on moving to an environment with a normal magnetic field, and it is impossible to obtain a correct orientation immediately.

On the other hand, according to the mobile terminal with an electronic compass in accordance with the first exemplary embodiment of the present invention, by performing a determination as to whether the offset correction value is valid or invalid by the offset correction value determination unit 22, only in a case of a determination of valid, the offset correction value is stored in the offset correction initial value storage unit. Thus, on moving to an environment subject to a normal magnetic field after performing calibration in an environment subject to a strong magnetic field and using the electronic compass, it is possible to obtain a correct orientation immediately. Furthermore, according to the orientation calculation method in accordance with the first exemplary embodiment, after performing a calibration in an environment subject to a strong magnetic field to obtain an orientation, on moving to an environment with a normal magnetic field a correct orientation can be immediately obtained.

### INDUSTRIAL APPLICABILITY

The electronic compass, the mobile terminal with an electronic compass, and the geomagnetic sensor correction method of the present invention can be applied to a mobile telephone or the like, that has a navigation function in which a display of an orientation is possible.

The exemplary embodiments and examples may include variations and modifications without departing the gist and scope of the present invention as disclosed herein and claimed as appended herewith, and furthermore based on the fundamental technical spirit. It should be noted that any combination and/or selection of the disclosed elements may fall within the claims of the present invention. That is, it should be noted that the present invention of course includes various variations and modifications that could be made by those skilled in the art according to the overall disclosures including claims and technical spirit.

### REFERENCE SIGNS LIST

1: mobile telephone with electronic compass (slide type)
2: mobile telephone with electronic compass (clam shell type)
10: geomagnetic sensor
12: geomagnetic orientation calculation unit
14: offset correction initial value storage unit
16: offset correction initial value (open state)
18: offset correction initial value (closed state)
20: calibration unit
22: offset correction value determination unit
24: state detection unit
26: display unit
28: offset correction value
30: orientation information
32: relative position state between first housing and second housing
40, 52: first housing
42, 54: second housing
44, 58: operation unit
48: display unit (sub-display)
50: display unit (main-display)
56: hinge
60: receiver-speaker
62: operation unit side circuit board
63: display unit side circuit board
70: 3-axis orientation sphere
72: projection of orientation sphere

## Claims

1. A mobile terminal with electronic compass, comprising:
a geomagnetic sensor; a calibration unit that calculates an offset correction value for said geomagnetic sensor;
a geomagnetic orientation calculation unit that calculates orientation based on a sensor value obtained by said geomagnetic sensor and said offset correction value; and
a display unit that displays said calculated orientation, said mobile terminal further comprising:
a first housing that houses said geomagnetic sensor;
a second housing connected to said first housing, with relative position thereto being variable;
a state detection unit that detects a relative position state between the first housing and the second housing;
an offset correction initial value storage unit that stores an offset correction initial value for each of a plurality of relative position states detected by said state detection unit; and
an offset correction value determination unit that determines whether said offset correction value calculated by said calibration unit is valid or invalid, wherein
said offset correction value determination unit, in a case of determining that said offset correction value calculated by said calibration unit is valid, updates said offset correction value as said offset correction initial value corresponding to said relative position state, and stores said offset correction initial value in said offset correction initial value storage unit.

2. The mobile terminal with electronic compass according to claim 1, wherein the relative position states between the first housing and the second housing include an open state where an operation unit of said mobile terminal is exposed, and a closed state where said operation unit is hidden.

3. The mobile terminal with electronic compass according to claim 1 or 2, wherein
a representative value of offset correction is set for each of said plurality of relative position states,
in a case where a difference between said offset correction value calculated by said calibration unit and said representative value of offset correction corresponding to said relative position state is within a prescribed range, a determination is made that said offset correction value calculated by said calibration unit is valid, and
in the other cases a determination is made that said offset correction value is invalid.

4. The mobile terminal with electronic compass according to claim 1 or 2, wherein
in a case where a difference between said offset correction value calculated by said calibration unit and a latest offset correction initial value corresponding to said relative position state is within a prescribed range, a determination is made that said offset correction value calculated by said calibration unit is valid, and
in the other cases a determination is made that said offset correction value is invalid.

5. A geomagnetic orientation calculation method of calculating an orientation based on a sensor value obtained by a geomagnetic sensor, said method comprising:
a state detection step of detecting a relative position state between a first housing that houses said geomagnetic sensor, and a second housing connected to said first housing, with relative position thereto being variable;
a step of reading an offset correction initial value corresponding to said relative position state detected in said state detection step, to set said offset correction initial value as said offset correction value;
a step of calibrating an offset correction value of said geomagnetic sensor to update said offset correction value;
an offset correction value determination step of determining whether said offset correction value obtained by said calibration is valid or invalid;
a step of storing, in a case where the determination in said offset correction value determination step is valid, said offset correction value obtained by said calibration as said offset correction initial value corresponding to said relative position state; and
a geomagnetic orientation calculation step of calculating orientation, based on said sensor value obtained by said geomagnetic sensor and said offset correction value.

6. The orientation calculation method according to claim 5, wherein
a representative value of offset correction is set for each of said plurality of relative position states,
in said offset correction value determination step, in a case where a difference between said offset correction value obtained in said calibration and said representative value of offset correction corresponding to said relative position state is within a prescribed range, a determination is made that said offset correction value obtained in said calibration is valid, and
in the other cases a determination is made that said offset correction value is invalid.

7. The orientation calculation method according to claim 5, wherein
in said offset correction value determination step, in a case where a difference between said offset correction value obtained in said calibration and a latest offset correction initial value corresponding to said relative position state is within a prescribed range, a determination is made that said offset correction value obtained in said calibration is valid, and
in the other cases a determination is made that said offset correction value is invalid.
